**Europäisches Patentamt**

**European Patent Office**

**Office européen des brevets**

(11) Veröffentlichungsnummer: **0 144 490**
**A2**

# (12) EUROPÄISCHE PATENTANMELDUNG

(21) Anmeldenummer: **84104469.6**

(22) Anmeldetag: **19.04.84**

(51) Int. Cl.⁴: **B 23 B 45/14**

(30) Priorität: **02.12.83 DE 3343683**

(43) Veröffentlichungstag der Anmeldung:
**19.06.85 Patentblatt 85/25**

(84) Benannte Vertragsstaaten:
**AT CH DE FR GB LI NL**

(71) Anmelder: **Wolff, Robert**
**Im Kiesacker 12**
**D-5446 Engeln(DE)**

(72) Erfinder: **Wolff, Robert**
**Im Kiesacker 12**
**D-5446 Engeln(DE)**

(74) Vertreter: **Peerbooms, Rudolf, Dipl.-Phys.**
**Postfach 200 208 Dickmannstrasse 45C**
**D-5600 Wuppertal 2(DE)**

(54) **Bohr- und Fräsführer für auswechselbare Antriebsmaschinen.**

(57) Ein Bohr- und Fräsführer (1) für auswechselbare Antriebsmaschinen, z. B. Handbohrmaschinen, weist einen auf zwei parallelen Führungssäulen (3) gegen Rückstellfederkraft verschiebbaren Maschinenhalter (4) und eine mit einem zentralen Durchbruch (14) versehene Fußplatte (2) auf, an der die Führungssäulen (3) schwenkbar gelagert sind.

Zur Erzielung universeller Einsatzmöglichkeiten, wobei insbesondere verschiedene Maschinentypen einspannbar und verstellbare Führungsanschläge montierbar sein sollen, sind die nicht an dem Maschinenhalter (4) anliegenden Enden (32) der Rückstellfeder (8) an einem auf den Führungssäulen (3) verschiebbaren und arretierbaren, separaten Widerlager (9) befestigt, ist die Fußplatte (2) mit zwei parallelen Einschubkanälen (17) versehen, die parallel zur Fußplattenebene liegen und zwei Führungsstangen (18) aufnehmen, an denen ein Führungsanschlag (19) sitzt, und gehen die Einschubkanäle (17) jeweils eng an den Führungssäulen (3) vorbei und durchsetzen die die beiden Führungssäulen (3) enthaltende Ebene senkrecht.

Fig. 1

EP 0 144 490 A2

Patentanmeldung

Anmelder : Robert Wolff

    5446 Engeln


Bohr- und Fräsführer für auswechselbare Antriebsmaschinen

Die Erfindung betrifft einen Bohr- und Fräsführer für
auswechselbare Antriebsmaschinen, z. B. Handbohrmaschinen,
mit einem auf zwei parallelen Führungssäulen gegen Rückstellfederkraft verschiebbaren Maschinenhalter und mit
einer mit einem zentralen Durchbruch versehenen Fußplatte,
an der die Führungssäulen schwenkbar gelagert sind.

Durch die US-PS 38 90 058 ist ein gattungsgemäßer Bohr-
und Fräsführer für auswechselbare Antriebsmaschinen bekannt,
der insbesondere für halslose, am Hauptkörper festzuspannende
Handbohrmaschinen konzipiert ist. Mit Hilfe dieses Führers
können Bohrungen in ein Werkstück eingebracht werden, welche
je nach der Schräglage der Führungssäulen beliebige Winkel zur Werkstückoberfläche einnehmen können. In einfachen Fällen, bei denen die niedrige Drehzahl einer Handbohrmaschine genügt, kann dieser Führer auch zum Oberfräsen eingesetzt werden. Das dortige Gerät ist jedoch nicht für hochtourige Fräsmotoren geeignet, weil diese anstelle eines Bohrfutters sehr kurze Spanneinrichtungen, z. B. Spannzangen, aufweisen und von daher sehr dicht über der Werkstückoberfläche geführt werden müssen. D. h. die Position des Maschinenhalters auf den Führungssäulen müßte bei dem bekannten Führer so stark nach unten verschoben werden, daß die Rückstellfederkraft unzumutbar groß würde. Darüber hinaus weist der dortige Führer als Führungshilfe beim Fräsen nur die Ränder der Fußplatte auf, so daß er auch in dieser Hinsicht für eine Vielzahl von Fräsarbeiten nicht geeignet ist.

Der Erfindung liegt die Aufgabe zugrunde, einen gattungsgemäßen Bohr- und Fräsführer zu schaffen, welcher universelle Einsatzmöglichkeiten bietet, wobei insbesondere verschiedene Maschinentypen einspannbar und verstellbare Führungsanschläge montierbar sein sollen.

Diese Aufgabe wird erfindungsgemäß dadurch gelöst, daß die nicht an dem Maschinenhalter anliegenden Enden der Rückstellfeder an einem auf den Führungssäulen verschiebbaren und arretierbaren, separaten Widerlager befestigt sind, daß die Fußplatte mit zwei parallelen Einschubkanälen versehen ist, die parallel zur Fußplattenebene liegen und zwei Führungsstangen aufnehmen, an denen ein Führungsanschlag sitzt,
und daß die Einschubkanäle jeweils eng an den Führungssäulen
vorbeigehen und die die beiden Führungssäulen enthaltende
Ebene senkrecht durchsetzen. Die auf den Führungssäulen jeweils
arretierbaren Widerlager der Rückstellfedern erlauben es, die
Rückstellfederkraft auf die jeweils gewünschte Ausgangsposition
des Maschinenhalters einzustellen. Damit können sowohl Handbohrmaschinen mit einem vorgesetzten Einspannfutter als auch
Fräsmotore mit kurzen Spannzangen in den Bohr- und Fräsführer
eingesetzt werden, wobei in beiden Fällen eine leichte Bedienbarkeit gegeben ist. Die beiden parallelen Einschubkanäle
in der Fußplatte ermöglichen die Anordnung eines verstellbaren
Führungsanschlags, was insbesondere die Einsatzmöglichkeiten
des Führers beim Oberfräsen wesentlich erweitert. Diese Einschubkanäle durchsetzen senkrecht die Ebene der beiden Führungssäulen, damit eine Führung in Richtung ihrer Schwenkachse
möglich ist. Nur bei dieser Orientierung der Einschubkanäle
können angeschrägte Kanten und Nuten einwandfrei gefräst werden.
Nach der Erfindung sollen die Einschubkanäle jeweils eng an
den Führungssäulen vorbeigehen, um einerseits eine geringe
Baugröße der Fußplatte und damit bequeme Handhabung des Führers
zu erreichen und um andrerseits bei gegebener Fußplattengröße
optimal breite Abstände sowohl zwischen den Führungssäulen als
auch zwischen den Führungsstangen zu erzielen.

0144490

Nach einer bevorzugten Ausführungsform der Erfindung kann der Maschinenhalter zwei nach oben gerichtete, auf der Führungssäule laufende Ansätze aufweisen, welche im mittleren Bereich als eine je eine Rückstellfeder mit Widerlager aufnehmende Kammer ausgebildet sind. Bei dieser Ausführungsform der Erfindung werden bei einer Verstellung der Ausgangsposition des Maschinenhalters die Rückstellfedern automatisch mitgeführt. Die Ausgangsposition von Maschinenhalter und Widerlager braucht nicht getrennt eingestellt zu werden, sondern wird gemeinsam durch die Grundposition der Widerlager bestimmt. Die Höhe der Rückstellfederkraft wird durch die Größe der Kammern vorgegeben und ist damit für jede Ausgangsposition gleich, ohne daß eine gesonderte Justierung erforderlich wäre.

In weiterer Ausgestaltung der Erfindung kann in dem Ansatz ein Skalenstück parallel zur Führungssäule einstellbar sein, welches als Hubbegrenzer auf das Widerlager auftrifft. Auf diese Weise wird auch ein einstellbarer Hubbegrenzer bei einer Versetzung der Grundposition des Maschinenhalters mitgeführt; d. h. auch in dieser Hinsicht ergeben sich bei einer Umstellung von z. B. einer Handbohrmaschine auf einen Fräsmotor keinerlei Anpassungs- oder Bedienungsprobleme.

Der Erfindung zufolge können die Führungssäulen breitflächig auf der Fußplatte aufsitzen und in ihrer Achsrichtung an der Fußplatte festgespannt sein. Bei dieser Verbindungsform zwischen Führungssäulen und Fußplatte kann eine breite Klemmfläche für eine sichere Festspannung erzielt werden, ohne daß die Bauhöhe des Führers vergrößert wird. Das untere Ende der Führungssäulen kann damit so dicht über der Fußplatte angeordnet werden, daß auch ein Fräsmotor mit sehr kurzem Spannansatz genügend nahe an dem zu bearbeitenden Werkstück angeordnet werden kann und immer noch ein ausreichender Vorschubweg vorhanden ist.

Der Erfindung zufolge kann jede Führungssäule je einen an der Fußplatte angebrachten, in Umfangsrichtung längsgeschlitzten und in Schwenkrichtung zylindrisch gekrümmten Bogen durchsetzen und einen auf dem Bogen aufsitzenden zylindrischen Kragen besitzen, der durch eine am unteren Ende der Führungssäule angebrachte Spanneinrichtung auf dem Bogen festspannbar ist. Bei dieser Verbindungsform zwischen Führungssäulen und Fußplatte lassen sich die Führungssäulen über einen Winkel von nahezu 180° schwenken, wobei eine sichere, stufenlose Festspannung in jeder beliebigen Winkellage gegeben ist. Die Spannfläche zwischen den zylindrischen Kragen und den gekrümmten Bogen ist dabei so breit, daß auch bei größeren Belastungen, wie sie beim Fräsen auftreten können, eine stabile Lage von Führungssäulen und Maschinenhalter sichergestellt ist.

In Ausgestaltung der Erfindung kann die Fußplatte eine kreisförmige Außenkontur mit zwei abgeflachten, einander gegenüberliegenden Seiten aufweisen, und können die abgeflachten Seiten neben den Führungssäulen senkrecht zur Ebene der Führungsränder liegen und können die Einschubkanäle zwischen den Führungssäulen angeordnet sein. Infolge der kreisförmigen Außenkontur der Fußplatte ist dafür gesorgt, daß bei einer Führung der Fußplatte entlang einer Leiste oder dgl. ein immer gleichbleibender Abstand zwischen Leiste und Werkzeug gegeben ist. D. h. auch bei einer leichten Verdrehung des Führers können z. B. exakte, geradlinige Nuten gefräst werden. Die abgeflachten Seiten neben den Führungssäulen und die Anordnung der Führungskanäle zwischen den Führungssäulen hat eine weitere Verringerung der Baugröße der Fußplatte zur Folge. Die Ausdehnung der Fußplatte wird dabei insbesondere in Fräsrichtung verringert, so daß sehr dicht an Wände, Begrenzungen oder dgl. herangefräst werden kann.

In Ausgestaltung der Erfindung kann der Führungsanschlag ein rechtwinkliges Z-Stück sein, dessen einer Endschenkel mit Durchgangskanälen für die Aufnahme von und die Arretierung an den Führungsstangen versehen ist und dessen anderer, die Anschlagfläche bildender Schenkel eine flache Grundleiste ist, an der eine abnehmbare Verbreiterungsplatte befestigbar ist. Diese Ausgestaltung des Führungsanschlages als rechtwinkliges Z-Stück erlaubt es insbesondere, daß die eigentliche Anschlagfläche auch unterhalb der Fußplatte des Führers liegen kann, was insbesondere beim Oberfräsen von großer Bedeutung ist. Die Ausbildung der Anschlagfläche als flache Grundleiste dient zum flachseitigen Fräsen von Brettern oder dgl.; die Verbreiterungsplatte ermöglicht eine einwandfreie Ausrichtung des Führers bei stirnseitigen Fräsarbeiten. In der Ausführung nach der Erfindung ist der Führungsanschlag damit sehr vielseitig einsetzbar und zugleich sehr kostengünstig. So entsteht durch die abnehmbare Verbreiterungsplatte unter Ausnutzung des ursprünglichen Z-Stückes ein neuer Führungsanschlag; d. h. die Zahl der Zubehörteile wird deutlich reduziert. Die Abnehmbarkeit des Führungsanschlages gestattet weiterhin eine anderweitige Verwendung der Führungsstangen, z. B. zur Montage eines Zirkelansatzes.

Der Erfindung zufolge kann an der Außenrandfläche der Fußplatte eine Gewindebohrung zum Festschrauben eines zugeordneten Winkelstückes mit daran verstellbarem, kreisförmigem Anschlagkörper vorgesehen sein. Mit einem derartigen, kreisförmigen Anschlagkörper kann der Führer an abgerundeten Außenkonturen entlang gefahren werden, um z. B. an Stilmöbeln, Balkonverkleidungen oder dgl. abgeschrägte Ränder zu erzeugen. Die Verstellbarkeit des Anschlagkörpers dient zur Anpassung an die jeweiligen Werkstücke, Fräser usw.

In weiterer Ausgestaltung der Erfindung kann die Fußplatte mit Befestigungseinrichtungen, z. B. Anschraublöchern, zur stationären Anbringung an einer zugeordneten Tischkonsole versehen sein, welche mit ihrem Stützschenkel an einer Werkbank oder dgl. befestigbar ist. Die Einsatzmöglichkeiten des Bohr- und Fräsführers werden durch diese Ausgestaltung noch einmal in erheblichem Maße erweitert, da in vielen Fällen die stationäre Anbringung z. B. eines Fräsmotors als Tischfräse ein genaues Arbeiten erleichtert und beschleunigt. Die Tischkonsole wird derart an der Werkbank befestigt, daß ihr abkragender Schenkel mit der Oberfläche der Werkbank fluchtet; infolgedessen kann die Werkbank mit als Auflagefläche für die Werkstücke genutzt werden. Auch bei einer stationären Anbringung des Führers an einer zugeordneten Tischkonsole können die Einschubkanäle in der Fußplatte zur Anbringung von Führungsanschlägen genutzt werden; d. h. an der Tischkonsole selbst brauchen keine gesonderten Führungsanschläge vorgesehen zu sein. Trotz dieser zusätzlichen, erheblichen Erweiterung der Einsatzmöglichkeiten des Fräsführers entstehen daher nur geringfügige zusätzliche Kosten.

Schließlich können der Erfindung zufolge in der Tischkonsole zwei Schlitze zur Durchführung des den kreisförmigen Anschlagkörper tragenden Führungswinkels und zwei Durchbrüche im Bereich der unteren Enden der Führungssäulen vorgesehen sein. Auf diese Weise ist auch bei einem stationären Betrieb als Tischfräse die Einbringung eines verstellbaren, kreisförmigen Anschlagkörpers möglich. Die Durchbrüche im Bereich der unteren Enden der Führungssäulen gestatten einen freien Zugang zu den Spanneinrichtungen für die Führungssäulen, so daß bei einer Verstellung der Schräglage der Führer an der Tischkonsole belassen werden kann. Folglich ist auch bei einer stationären Anbringung des Bohr- und Fräsführers nach der Erfindung die Bedienung denkbar einfach.

Die Erfindung wird im folgenden anhand der Zeichnung näher beschrieben. In der Zeichnung zeigen :

Fig. 1 einen Bohr- und Fräsführer in perspektivischer Darstellung,

Fig. 2 eine Kammer zur Aufnahme der Rückstellfedern des Führers gemäß einem Schnitt II-II in Fig. 1,

Fig. 3 den Spannfuß einer Führungssäule des Führers gemäß einem Schnitt III-III in Fig. 1,

Fig. 4 den Führer mit einem daran montierten, kreisförmigen Anschlagkörper, von unten gesehen, gemäß einer Blickrichtung IV in Fig. 1,

Fig. 5 eine Tischkonsole in Draufsicht mit dem darunter befestigten Führer und

Fig. 6 die Tischkonsole gemäß einem Schnitt VI-VI in Fig. 5.

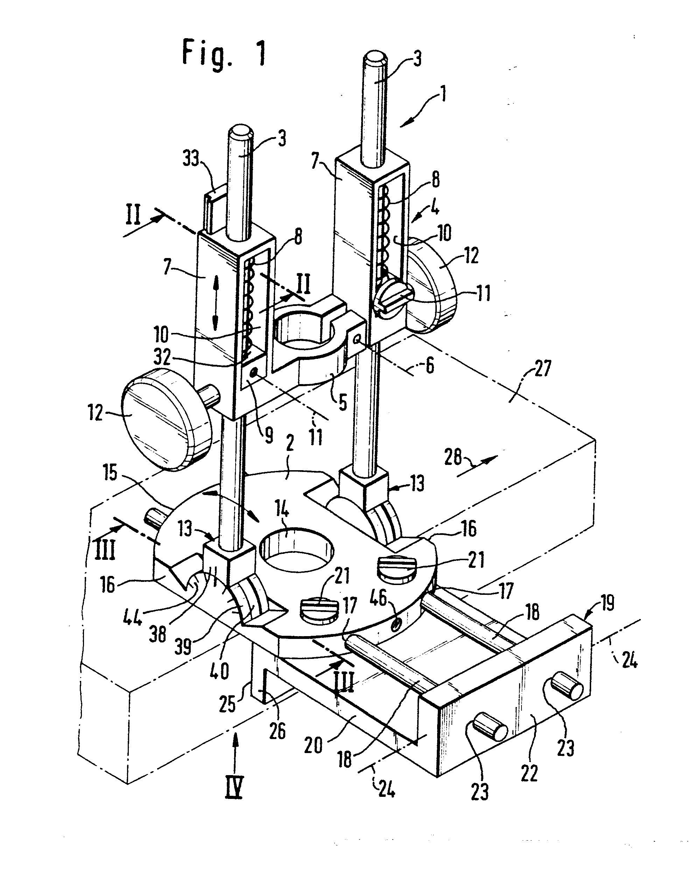

Fig. 1 zeigt in perspektivischer Darstellung einen Bohr- und Fräsführer 1, welcher im wesentlichen aus einer Fußplatte 2, zwei Führungssäulen 3 und einem Maschinenhalter 4 aufgebaut ist. Der Maschinenhalter 4 weist einen geschlitzten Ring 5 auf, in welchem mit Hilfe einer Spannschraube 6 ein Maschinenhals festspannbar ist. An den Maschinenhalter 4 sind weiterhin zwei nach oben gerichtete, auf den Führungssäulen 3 laufende Ansätze 7 angeformt, welche im mittleren Bereich als eine je eine Rückstellfeder 8 mit Widerlager 9 aufnehmende Kammer 10 ausgebildet sind. Die Widerlager 9 sind mittels Spannschrauben 11 an den Führungssäulen 3 arretierbar. An dem Maschinenhalter 4 sind schließlich zwei Handgriffe 12 befestigt, mit deren Hilfe der Maschinenhalter 4 mit eingespannter Maschine niedergedrückt und der Führer 1 insgesamt bedient werden kann. Einer der beiden Handgriffe 12 ist dabei als Spannschraube ausgebildet, damit der Maschinenhalter 4 unabhängig von den Widerlagern 9 an den Führungssäulen 3 festgesetzt werden kann.

Die Führungssäulen 3 sind mit Spannfüßen 13 an der Fußplatte 2 befestigt und gegenüber dieser in Richtung des Doppelpfeiles schwenkbar.

Die Fußplatte 2 weist einen zentralen Durchbruch 14 zur
Durchführung eines Werkzeuges, z. B. eines Bohrers oder
Fräsers, auf und besitzt eine kreisförmige Außenkontur 15
mit zwei abgeflachten, einander gegenüberliegenden Seiten
16, wobei die abgeflachten Seiten 16 neben den Führungssäulen 3 senkrecht zur Ebene der Führungssäulen 3 liegen.
Zwischen den Führungssäulen 3 ist die Fußplatte 2 mit zwei,
zu den Seiten 16 parallelen Einschubkanälen 17 für zwei
Führungsstangen 18 versehen, an denen ein Führungsanschlag
19 in Form eines rechtwinkligen Z-Stückes befestigt ist,
dessen Mittelschenkel 20 parallel zu den Stangen 18 liegt.
Die Führungsstangen 18 sind mit Hilfe von Spannschrauben 21
in der Fußplatte 2 arretierbar. Der Endschenkel 22 besitzt
zwei Durchgangskanäle 23 für die Führungsstangen 18, wobei
er über Spannschrauben 24 an den Führungsstangen 18 arretierbar ist. Der zweite, die Anschlagfläche 25 bildende Schenkel
26 liegt an der Stirnseite eines flachseitig aufgespannten
Werkstückes 27 an, auf welchem der Führer 1 in Pfeilrichtung
28 geführt wird.

Anstelle des Führungsanschlages 19 könnte an einer der
Führungsstangen 18 auch ein nicht gezeigter Zirkelfuß befestigt werden, um den dann der Führer 1 kreisförmig gedreht
werden könnte.

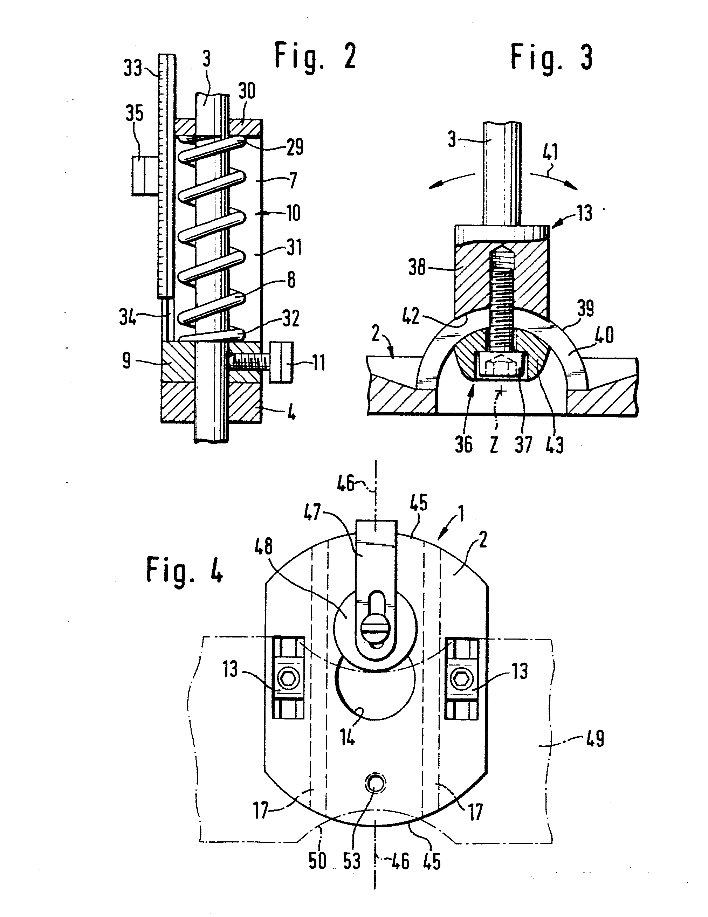

Fig. 2 zeigt einen der beiden Ansätze 7 des Maschinenhalters 4, welcher in seinem mittleren Bereich als eine die Rückstellfeder 8 aufnehmende Kammer 10 ausgebildet ist. Die Rückstellfeder 8 stützt sich mit ihrem oberen Ende 29 an der oberen Deckplatte 30 des Ansatzes 7 und damit am Maschinenhalter 4 ab, da der Maschinenhalter 4 und die Deckplatte 30 über die Seitenwand 31 fest miteinander verbunden sind. Das untere Ende 32 der Rückstellfeder 8 stützt sich auf dem Widerlager 9 ab, welches mittels der Spannschraube 11 an der Führungssäule 3 arretierbar ist. Nach einem Lösen der Spannschraube 11 kann der Maschinenhalter 4 auf der Führungssäule 3 frei auf- und abgeführt werden, wobei die Rückstellfeder 8 in der Kammer 10 automatisch mitgenommen wird. Nach dem Festziehen der Spannschraube 11 kann dann gegen die Kraft der Rückstellfeder 8 ein Vorschub zum Bohren und Fräsen ausgeführt werden, wobei unabhängig von der gewählten Grundposition die Rückstellfederkraft stets gleich ist.

Der Vorschubweg kann durch ein Skalenstück 33 begrenzt werden, das auf das Widerlager 9 auftrifft. Das Skalenstück 33 kann dabei z. B. in einer Nut 34 in der Seitenwand 31 des Ansatzes 7 geführt und mit Hilfe der Schraube 35 an diesem in beliebiger Stellung arretierbar sein.

Fig. 3 zeigt einen Schnitt durch den Spannfuß 13 einer Führungssäule 3, welche mittels einer Spanneinrichtung 36, z. B. einer Spannschraube 37, in Achsrichtung an der Fußplatte 2 festspannbar ist. Der Spannfuß 13 ist als zylindrischer Kragen 38 ausgebildet, welcher seinerseits auf
einem gekrümmten Bogen 39 der Fußplatte 2 aufsitzt. Der
Bogen 39 weist einen Längsschlitz 40 auf, in dem die
Spannschraube 37 geführt werden kann, so daß die Führungssäule 3 in Pfeilrichtung 41 auf einem Gesamtbereich von
nahezu 180$^{\circ}$ schwenkbar ist. Durch die breite Grundfläche 42
des Kragens 38 und einen zugeordneten Spannstein 43 läßt
sich eine zuverlässige Festsetzung der Führungssäule 3
erreichen. Die Anordnung des Spannfußes 13 wird auch anhand
der Fig. 1 deutlich. Der Bogen 39 ist zur genauen Einstellung
des Schwenkwinkels der Führungssäulen 3 mit einer Skala 44
versehen. Das Zentrum Z der Verschwenkung liegt etwa in halber
Höhe der Fußplatte 2, wobei die Schwenkachse den Durchbruch 14
der Fußplatte diametral durchsetzt.

Fig. 4 zeigt einen Blick auf die Unterseite der Fußplatte 2
des Führers 1. An der Außenrandfläche 45 der Fußplatte 2
sind Gewindebohrungen 46 zum Festschrauben eines zugeordneten
Winkelstücks 47 mit daran verstellbarem, kreisförmigen Anschlagkörper 48 eingebracht. Mit Hilfe dieses Konturengebers
kann auch ein Werkstück 49 abgefahren werden, dessen Seitenkanten 50 eine gekrümmte Kontur aufweisen. In Fig. 4 sind
außerdem in gestrichelter Form die Einschubkanäle 17 eingezeichnet, welche jeweils zwischen dem mittleren Durchbruch 14 und den Spannfüßen 13 verlaufen. Gerade an dieser
Figur wird deutlich, daß der zur Verfügung stehende Platz in der Fußplatte in optimaler Weise genutzt ist.

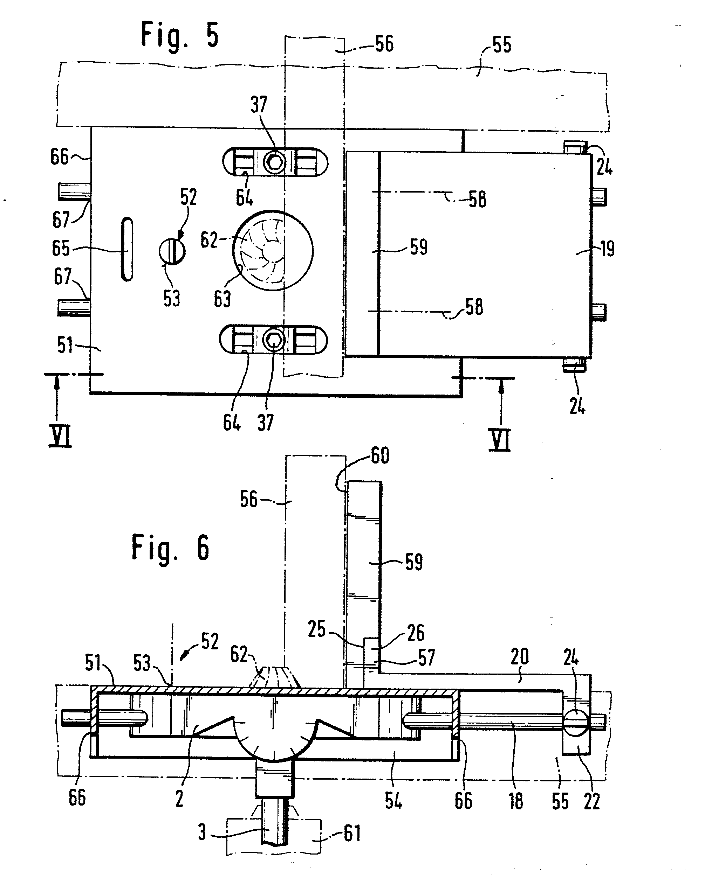

Die Fig. 5 und 6 zeigen in verschiedenen Blickrichtungen eine Tischkonsole 51, an der die Fußplatte 2 über Befestigungseinrichtungen 52, z. B. Anschraublöcher 53, vergl. auch Fig. 4, befestigt ist. Auf diese Weise ist ein stationärer Einsatz des Führers 1 als Tischfräser möglich. Die aus Blech gefertigte Tischkonsole 51 ist mit einem Stützschenkel 54 an einer Werkbank 55 befestigt. Der Stützschenkel 54 erstreckt sich dabei senkrecht zu der von den beiden Führungssäulen 3 aufgespannten Ebene. Die Oberfläche der Werkbank 55 kann auf diese Weise zur Führung eines Werkstückes 56 mitgenutzt werden.

In dem gezeigten Anwendungsbeispiel ist der Z-förmige Führungsanschlag 19 benutzt, dessen einer Schenkel 26 als flache Grundleiste 57 ausgebildet ist. An die Grundleiste 57 ist z. B. über Schrauben 58 eine Verbreiterungsplatte 59 angesetzt, so daß die ursprüngliche Anschlagsfläche 25 zur wesentlich größeren Anschlagsfläche 60 verbreitert ist. Mit Hilfe dieser Verbreiterungsplatte 59 ist auch ein stirnseitiges Fräsen oder Bohren eines plattenförmigen Werkstückes 56 möglich. In dem gezeigten Beispiel ist in das Spannfutter 61 einer Bohrmaschine ein Formfräser 62 eingesetzt, mit dem sich eine abgeschrägte Kante erzielen läßt. Mit dem Führer 1 nach der Erfindung könnte eine solche abgeschrägte Kante aber auch mit einem zylindrischen Fräser durch Schrägstellen der Führungssäulen 3 erzielt werden. Stirnfräsarbeiten sind selbstverständlich auch ohne die Benutzung der Tischkonsole 51 möglich.

Die Tischkonsole 51 weist in ihrem mittleren Bereich einen zentralen Durchbruch 63 für das Werkzeug sowie daneben zwei weitere Durchbrüche 64 auf, die den Zugang zu den Spannschrauben 37 der Spannfüße 13 freilassen. Des weiteren sind in der Tischkonsole 51 Schlitze 65 zur Durchführung des den kreisförmigen Anschlagkörper 48 tragenden Winkelstücks 47 angespart. Schließlich sind in den Seitenschenkeln 66 noch Löcher 67 zum Durchtritt der Führungsstangen 18 vorgesehen.

Patentansprüche

1. Bohr- und Fräsführer ( 1 ) für auswechselbare Antriebsmaschinen, z. B. Handbohrmaschinen, mit einem auf zwei
parallelen Führungssäulen ( 3 ) gegen Rückstellfederkraft
verschiebbaren Maschinenhalter ( 4 ) und mit einer mit
einem zentralen Durchbruch ( 14 ) versehenen Fußplatte (2),
an der die Führungssäulen ( 3 ) schwenkbar gelagert sind,
dadurch gekennzeichnet, daß die nicht an dem Maschinenhalter ( 4 ) anliegenden Enden ( 32 ) der Rückstellfedern
( 8 ) an einem auf den Führungssäulen ( 3 ) verschiebbaren
und arretierbaren, separaten Widerlager ( 9 ) befestigt
sind, daß die Fußplatte ( 2 ) mit zwei parallelen Einschubkanälen ( 17 ) versehen ist, die parallel zur Fußplattenebene liegen und zwei Führungsstangen ( 18 ) aufnehmen, an
denen ein Führungsanschlag ( 19 ) sitzt, und daß die
Einschubkanäle ( 17 ) jeweils eng an den Führungssäulen
( 3 ) vorbeigehen und die die beiden Führungssäulen ( 3 )
enthaltende Ebene senkrecht durchsetzen.

2. Bohr- und Fräsführer nach Anspruch 1, dadurch gekennzeichnet, daß der Maschinenhalter ( 4 ) zwei nach oben gerichtete, auf den Führungssäulen ( 3 ) laufende Ansätze (7)

0144490

aufweist, welche im mittleren Bereich als eine je eine Rückstellfeder ( 8 ) mit Widerlager ( 9 ) aufnehmende Kammer ( 10 ) ausgebildet sind.

3. Bohr- und Fräsführer nach Anspruch 2, dadurch gekennzeichnet, daß in einem der Ansätze ( 7 ) ein Skalenstück ( 33 ) parallel zur Führungssäule ( 3 ) einstellbar ist, welches als Hubbegrenzer auf das Widerlager ( 9 ) auftrifft.

4. Bohr- und Fräsführer nach einem der Ansprüche 1 bis 3, dadurch gekennzeichnet, daß die Führungssäulen ( 3 ) breitflächig auf der Fußplatte ( 2 ) aufsitzen und in ihrer Achsrichtung an der Fußplatte ( 2 ) festgespannt sind.

5. Bohr- und Fräsführer nach Anspruch 4, dadurch gekennzeichnet, daß jede Führungssäule ( 3 ) je einen an der Fußplatte ( 2 ) angebrachten, in Umfangsrichtung längsgeschlitzten und in Schwenkrichtung zylindrisch gekrümmten Bogen ( 39 ) durchsetzt und einen auf dem Bogen aufsitzenden zylindrischen Kragen ( 38 ) besitzt, der durch eine am unteren Ende der Führungssäulen ( 3 ) angebrachte Spanneinrichtung ( 36 ) auf dem Bogen ( 39 ) festspannbar ist.

6. Bohr- und Fräsführer nach einem der Ansprüche 1 bis 5, dadurch gekennzeichnet, daß die Fußplatte ( 2 ) eine kreisförmige Außenkontur ( 15 ) mit zwei abgeflachten, einander gegenüberliegenden Seiten ( 16 ) aufweist, daß die abgeflachten Seiten ( 16 ) neben den Führungssäulen ( 3 ) senkrecht zur Ebene der Führungssäulen liegen und daß die Einschubkanäle ( 17 ) zwischen den Führungssäulen ( 3 ) angeordnet sind.

7. Bohr- und Fräsführer nach Anspruch 1, dadurch gekennzeichnet, daß der Führungsanschlag ( 19 ) ein rechtwinkliges Z-Stück ist, dessen einer Endschenkel ( 22 ) mit Durchgangskanälen ( 23 ) für die Aufnahme von und die Arretierung an den Führungsstangen ( 18 ) versehen ist und dessen anderer, die Anschlagfläche ( 25 ) bildender Schenkel ( 26 ) eine flache Grundleiste ( 57 ) ist, an der eine abnehmbare Verbreiterungsplatte ( 59 ) befestigbar ist.

8. Bohr- und Fräsführer nach einem der Ansprüche 1 bis 7, dadurch gekennzeichnet, daß an der Außenrandfläche ( 45 ) der Fußplatte ( 2 ) eine Gewindebohrung ( 46 ) zum Festschrauben eines zugeordneten Winkelstückes ( 47 ) mit daran verstellbarem, kreisförmigem Anschlagkörper ( 48 ) vorgesehen ist.

9. Bohr- und Fräsführer nach einem oder mehreren der Ansprüche 1 bis 8, dadurch gekennzeichnet, daß die Fußplatte ( 2 ) mit Befestigungseinrichtungen, z. B. Anschraublöchern ( 53 ), zur stationären Anbringung an einer zugeordneten Tischkonsole ( 51 ) versehen ist, welche mit ihrem Stützschenkel ( 54 ) an einer Werkbank oder dgl. befestigbar ist.

10. Bohr- und Eräsführer nach den Ansprüchen 8 und 9, dadurch gekennzeichnet, daß in der Tischkonsole ( 51 ) zwei Schlitze ( 65 ) zur Durchführung des den kreisförmigen Anschlagkörper ( 48 ) tragenden Winkelstückes ( 47 ) und zwei Durchbrüche ( 64 ) im Bereich der unteren Enden der Führungssäulen ( 3 ) vorgesehen sind.

Fig. 1

Fig. 2

Fig. 3

Fig. 4

## Fig. 5

## Fig. 6